# EUROPÄISCHE PATENTSCHRIFT

(11) **EP 0 364 725 B1**
(45) Veröffentlichungstag und Bekanntmachung des Hinweises auf die Patenterteilung: **01.12.1993**
(21) Anmeldenummer: 89116631.6
(22) Anmeldetag: 08.09.1989
(51) Int. Cl.: G11B 5/17

(54) **Drehübertrager für einen Recorder**
Rotating transformer for a recorder
Transformateur rotatif pour un appareil enregistreur

(30) Priorität: 17.09.1988 DE 3831721
(43) Veröffentlichungstag der Anmeldung: 25.04.1990
(73) Patentinhaber: Deutsche Thomson-Brandt GmbH, 78010 Villingen-Schwenningen (DE)
(72) Erfinder: Schalk, Adelbert, Dipl.-Ing., D-7896 Wutöschingen 6 (DE)

(56) Entgegenhaltungen:
- EP-A- 0 152 325
- DE-A- 3 035 676

## Beschreibung

Die Erfindung geht aus von einem Verfahren gemäß dem Oberbegriff des Anspruchs 1. Ein derartiger Drehübertrager ist bekannt durch die DE-A-30 35 676.

Bei diesem bekannten Drehübertrager sind die Drähte der Wicklung durch Anwendung eines Vergußmaterials in der umlaufenden Ausnehmung des Spulenträgers vergossen, wobei zunächst die Drähte und das Vergußmaterial aus der Oberfläche des Spulenträgers hervorragen. Anschließend wird der Spulenträger an seiner Oberfläche so geschliffen, daß die Oberfläche des Spulenträgers, die teilweise abgeschliffenen Drähte und das Vergußmaterial in einer Ebene liegen.

Der Erfindung liegt die Aufgabe zugrunde, ein Verfahren zur Herstellung eines derartigen Drehübertragers zu schaffen, das fertigungstechnisch einfacher ist und insbesondere kein Vergießen der Drähte in der umlaufenden Ausnehmung Spulenträgers erfordert.

Diese Aufgabe wird durch die im Anspruch 1 beschriebene Erfindung gelöst. Vorteilhafte Weiterbildungen der Erfindung sind in den Unteransprüchen beschrieben.

Bei der Erfindung wird also in den aus Ferrit oder einem gleichwertigen Material bestehenden Kern ein kleiner Kunststoff-Spulenkörper eingesetzt, der an seinem Umfang mit umlaufenden Nuten zur Aufnahme des Drahtes der Wicklung versehen ist. Derartige Nuten in einem Kunststoff-Körper lassen sich mit hoher Genauigkeit herstellen. Die Breite wird vorzugsweise so bemessen, daß sich der Draht unter geringer Verformung seiner Lackschicht stramm in die Nuten einlegt. Durch den Spulenkörper wird indessen ein elektrisch und magnetisch neutraler Bereich innerhalb des Ferritkerns geschaffen, der eine sehr genaue und definierte Lage der durch den durchgehenden Draht gebildeten Windungen gewährleistet. Durch Verwendung eines Flachdrahtes mit rechteckigem Querschnitt kann eine besonders gute Ausnutzung des Wickelraumes erreicht werden

Die Erfindung wird anhand der Zeichnung erläutert. Darin zeigen
- Fig. 1: in einem Schnitt den erfindungsgemäß ausgebildeten Drehübertrager,
- Fig. 2: einen Ausschnitt aus Fig. 1 vergrößert,
- Fig. 3: eine Abwandlung der Anordnung gemäß Fig. 2,
- Fig. 4: die Ausbildung des Spulenkörpers,
- Fig. 5: die Lage der Drähte in den Nuten des Spulenkörpers und
- Fig. 6: eine Abwandlung der Anordnung nach Fig. 5.

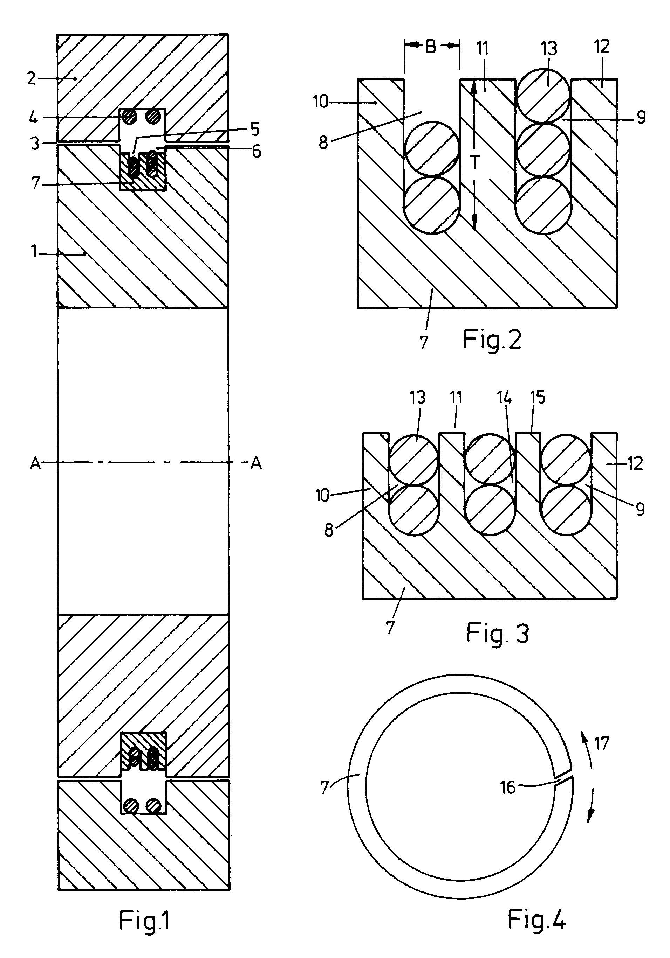

Fig. 1 zeigt einen Drehübertrager, der aus zwei ringförmigen, koaxial ineinander angeordneten Ferritkernen 1,2 besteht, zwischen denen ein Luftspalt 3 mit eine Weite von etwa 35 µm gebildet wird. Der Ferritkern 1 rotiert um die Achse A und bildet somit den Rotor des Drehübertragers. Der Ferritkern 2 trägt die Statorwicklung 4, die mit der stationären Schaltung verbunden ist. In den Kern 1 ist eine am äußeren Umfang umlaufende Nut 6 eingebracht. In die Nut 6 ist der aus Kunststoff bestehende Spulenkörper 7 stramm eingesetzt und ggf. verklebt. Der Spulenkörper 7 ist an seinem äußeren Umfang seinerseits mit zwei umlaufenden Nuten versehen, in die der Draht 5 der Übertragerwicklung gewickelt ist.

Fig. 2 zeigt die Ausbildung des Spulenkörpers 7 am äußeren Umfang. Die beiden umlaufenden Nuten 8,9, die durch drei Stege 10,11,12 gebildet sind, dienen zur Aufnahme des durchgehenden Drahtes 13, der die Wicklung des rotierenden Kerns 1 bildet. Die Schlitze 8,9 haben eine Breite B von 0,1 mm und eine Tiefe T von 0,3 mm. Die Breite B und der Durchmesser des Drahtes 13 sind so aufeinander abgestimmt, daß sich der Draht 13 unter geringer Verformung seiner Lackschicht stramm in die Nuten 8,9 einlegt. Die Windungszahl beträgt fünf, wobei die Nut 8 nicht voll ausgenutzt ist. Diese Windungszahl ergibt sich aus dem gewünschten elektrischen Übersetzungsverhältnis von z.B. 5 : 2 des Drehübertragers.

Fig. 3 zeigt eine Abwandlung bei der durch insgesamt vier Stege 10,11,15,12 drei Nuten 8,14,9 gebildet sind, die insgesamt sechs Lagen des Drahtes 13 aufnehmen.

Gemäß Fig. 4 ist der Spulenkörper 7 an einer Stelle mit einem Schlitz 16 versehen. Dadurch kann der Körper 7 in Richtung der Pfeile 17 aufgeweitet und sprengringartig in die Nut 6 des Ferritkerns 1 eingelegt werden.

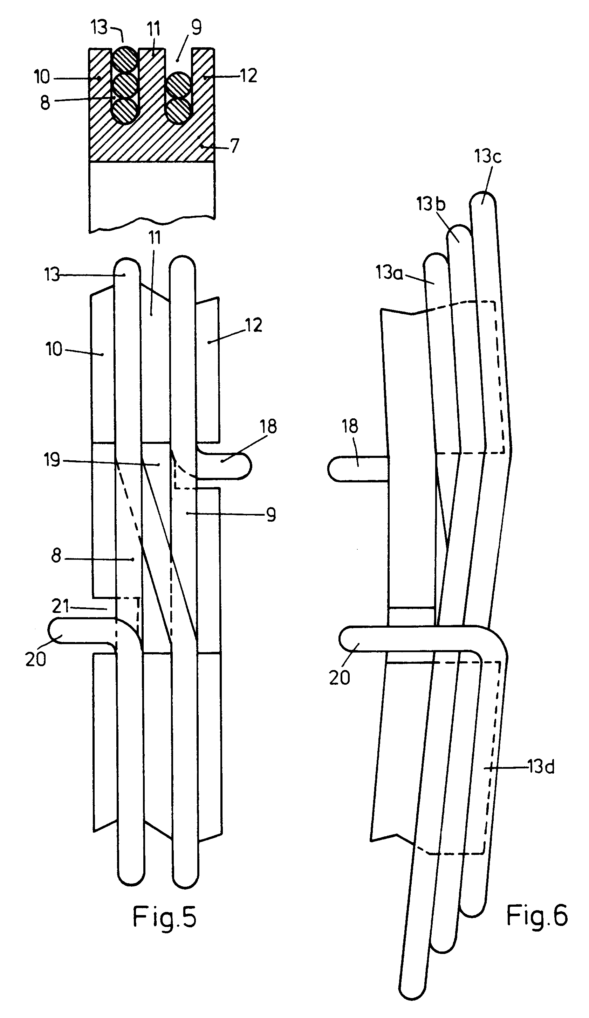

Fig. 5, 6 zeigen den Verlauf des Drahtes 13 entlang der beiden Nuten 8, 9. Der Drahtanfang 18 wird zunächst unten auf den Grund der Nut 9 eingelegt. Danach werden noch zwei weitere Lagen in der Nut 9 gewickelt. Danach wird der Draht 13 durch den Schlitz 19 in dem Steg 11 in die Nut 8 übergeführt und dort in drei Lagen gewickelt. Anschließend wird das Wicklungsende 20 durch eine Unterbrechung 21 in dem Steg 10 herausgeführt. Diese Lösung hat den Vorteil daß nur ein Übergang von der Nut 8 zu Nut 9 vorhanden ist und dadurch die Wickeltechnik vereinfacht wird.

Fig. 6 zeigt die einzelnen Lagen des gemäß Fig. 5 gewickelten Drahtes innerhalb der Nuten 8, 9 übereinander. Dargestellt sind für den Draht 13 die untere Lage 13a, die den Anfang der dritten Windung bildet, die mittlere Lage 13b, die den Anfang der vierten Windung bildet, sowie die obere Lage 13c, die den Anfang der fünften Wicklung bildet, sowie die Lage 13d, die das Ende fünften Windung bildet und als Wicklungsende 20 herausgeführt ist.

## Patentansprüche

1. Verfahren zur Herstellung eines Drehübertragers für einen Recorder mit zwei ringförmigen Kernen (1, 2) aus Ferrit oder Eisenverbundwerkstoff mit einer umlaufenden Ausnehmung (6), die mit einem, den Draht (13) der Wicklung aufnehmenden Spulenträger (7) gefüllt ist, **dadurch gekennzeichnet**, daß ein aus elastischem Kunststoff vorgeformter Spulenträger (7) in die Ausnehmung (6) eingelegt wird und ein Draht in im Spulenträger umlaufende Nuten mit einer dem Durchmesser des Drahtes (13) derart angepaßten Breite eingelegt wird, so daß der Draht (13) ohne Klebstoff fest in den Nutenliegt.

2. Verfahren nach Anspruch 1, **dadurch gekennzeichnet**, daß als Draht (13) ein Flachdraht mit rechteckigen Querschnitt verwendet wird.

3. Verfahren nach Anspruch 1, **dadurch gekennzeichnet**, daß mehrere Drähte (13) übereinander eingelegt werden.

4. Verfahren nach Anspruch 1, **dadurch gekennzeichnet**, daß der Spulenträger (7) an einer Stelle einen radialen Schlitz (16) aufweist und durch Aufweiten sprengringartig in die Ausnehmung (6) eingelegt wird.

## Claims

1. Method for producing a rotary transformer for a recorder with two annular cores (1, 2) of ferrite or an iron compound with a circumferential recess (6), which is filled with a coil support (7) carrying the wire (13) of the winding, characterised in that a coil support (7), which is preformed from an elastic plastic material, is laid in the recess (6) and a wire is laid in slots which extend around the coil support and are of a width which is adapted to the diameter of the wire (13) such that the wire (13) lies securely in the slots without adhesive.

2. Method according to claim 1, characterised in that the wire (13) which is used is a flat wire of a rectangular cross section.

3. Method according to claim 1, characterised in that a plurality of wires (13) are laid in the slots one on top of the other.

4. Method according to claim 1, characterised in that the coil support (7) comprises a radial slit (16) at one point and is laid in the recess (6) by being opened out in the manner of a spring ring.

## Revendications

1. Procédé pour fabriquer un transformateur rotatif pour un enregistreur avec deux noyaux annulaires (1, 2) en ferrite ou en matériau composite avec du fer avec un creux périphérique (6) qui est rempli avec un porte-bobines (7) qui loge le fil (13) de l'enroulement, **caractérisé en ce** qu'un porte-bobines (7) préformé en matière plastique élastique est inséré dans le creux (6) et qu'un fil est inséré dans une rainure périphérique du porte-bobines d'une largeur qui est adaptée au diamètre du fil (13) de telle manière que le fil (13) se trouve sans colle de manière solide dans les rainures.

2. Procédé selon la revendication 1, **caractérisé en ce** qu'un fil plat de section rectangulaire est utilisé comme fil (13).

3. Procédé selon la revendication 1, **caractérisé en ce** que plusieurs fils (13) sont mis en place l'un sur l'autre.

4. Procédé selon la revendication 1, **caractérisé en ce** que le porte-bobines (7) présente à un endroit une fente radiale (16) et qu'il est mis en place dans le creux (6) en s'élargissant à la manière d'un anneau à détacher.
